# EUROPÄISCHE PATENTSCHRIFT

(11) **EP 3 947 044 B1**
(45) Veröffentlichungstag und Bekanntmachung des Hinweises auf die Patenterteilung: **02.09.2026**
(21) Anmeldenummer: 20716730.5
(22) Anmeldetag: 30.03.2020
(51) Int. Cl.: B60R 11/04, F16M 13/02, F16M 11/04

(54) **HALTERUNGSBASISTEIL ZUR BEFESTIGUNG WENIGSTENS EINES KAMERAGEHÄUSES AN EINEM FAHRZEUGTEIL EINES FAHRZEUGS, KAMERAGEHÄUSE UND KAMERASYSTEM**
HOLDER BASE PART FOR SECURING AT LEAST ONE CAMERA HOUSING TO A VEHICLE PART OF A VEHICLE, CAMERA HOUSING AND CAMERA SYSTEM
PIÈCE DE BASE DE SUPPORT PERMETTANT DE FIXER AU MOINS UN BOÎTIER DE CAMÉRA À UNE PIÈCE DE VÉHICULE D'UN VÉHICULE, BOÎTIER DE CAMÉRA ET SYSTÈME DE CAMÉRA

(30) Priorität: 04.04.2019 DE 102019108882
(43) Veröffentlichungstag der Anmeldung: 09.02.2022
(73) Patentinhaber: Valeo Schalter und Sensoren GmbH, 74321 Bietigheim-Bissingen (DE)
(72) Erfinder: CYWINSKI, Thorsten, 74321 Bietigheim-Bissingen (DE); CHOURE, Raviraj, 74321 Bietigheim-Bissingen (DE); ELMERING, Kai, 74321 Bietigheim-Bissingen (DE); BIEHLMANN, Bernd, 74321 Bietigheim-Bissingen (DE)
(74) Vertreter: Jauregui Urbahn, Kristian
(86) Internationale Anmeldenummer: PCT/EP2020/058887
(87) Internationale Veröffentlichungsnummer: WO 2020/201175

(56) Entgegenhaltungen:
- EP-A1- 2 965 949
- WO-A1-2016/023621

## Beschreibung

### Technisches Gebiet

Die Erfindung betrifft ein Halterungsbasisteil zur Befestigung wenigstens eines Kameragehäuses an einem Fahrzeugteil eines Fahrzeugs, mit wenigstens einem Halteelement, das wenigstens einen Befestigungsabschnitt aufweist, mit dem das wenigstens eine Halteelement direkt oder indirekt an dem Fahrzeugteil befestigt werden kann, und das wenigstens einen Halteabschnitt aufweist, mit dem das wenigstens eine Halteelement mittels einer Schiebebewegung entlang einer gedachten Verbindungsachse mit wenigstens einem Verbindungselement aufseiten des wenigstens einen Kameragehäuses trennbar verbunden werden kann.

Ferner betrifft die Erfindung ein Kameragehäuse mit wenigstens einem Verbindungselement zur trennbaren Verbindung mittels einer Schiebebewegung entlang einer gedachten Verbindungsachse mit wenigstens einem Halteelement eines Halterungsbasisteils, mit dem das Kameragehäuse direkt oder indirekt an einem Fahrzeugteil eines Fahrzeugs befestigt werden kann, wobei wenigstens ein Verbindungselement wenigstens ein Gehäuse-Verriegelungselement aufweist, welches mit wenigstens einem Halterungs-Verriegelungselement aufseiten des wenigstens einen Halteelements zusammenwirken kann, um die Verbindung zwischen dem wenigstens einen Verbindungselement und dem wenigstens einen Halteelement zu verriegeln.

Außerdem betrifft die Erfindung ein Kamerasystem für ein Fahrzeug zur Befestigung, mit wenigstens einem Kameragehäuse und mit wenigstens einem Halterungsbasisteil, mit dem das wenigstens eine Kameragehäuse an einem Fahrzeugteil des Fahrzeugs befestigt werden kann, wobei das wenigstens eine Kameragehäuse mittels einer Schiebebewegung entlang einer gedachten Verbindungsachse trennbar mit dem wenigstens einen Halterungsbasisteil verbunden werden kann.

### Stand der Technik

Aus der US 2012/0099849 A1 ist ein Aufbau zum Montieren einer Kamera an einem Fahrzeug bekannt. Der Aufbau umfasst eine Basis, die an einem Fahrzeugkörper befestigt ist, eine Kamera, einen Gleitmechanismus, der so konfiguriert ist, dass die Kamera in einer Gleitrichtung gleiten kann, um lösbar mit der Basis in Eingriff gebracht zu werden, und ein Federelement, das konfiguriert ist, um eine Druckkraft in eine Richtung senkrecht zur Verschieberichtung zwischen der Basis und der Kamera in einem Eingriffszustand zu erzeugen, wodurch die Kamera in Bezug auf die Basis gehalten wird. Auch aus der WO 2016/023621 A1 ist ein Gattungsgemäßes Halterungsbasisteil bekannt.

Der Erfindung liegt die Aufgabe zugrunde, eine Halterungsbasisteil, ein Kameragehäuse und ein Kamerasystem der eingangs genannten Art zu gestalten, mit denen eine zuverlässige Montage des Kameragehäuses auch in unterschiedlich ausgestalteten, insbesondere unterschiedlich geneigten, Fahrzeugteilen einfacher realisiert werden kann.

### Offenbarung der Erfindung

Diese Aufgabe wird erfindungsgemäß bei der Halterungsbasisteil dadurch gelöst, dass wenigstens ein Halteabschnitt wenigstens einen Einschubbereich wenigstens mit begrenzt, in den das wenigstens eine gehäuseseitige Verbindungselement zur trennbaren Verbindung mit dem wenigstens einen Halteelement eingeschoben werden kann, wenigstens ein Halteelement wenigstens ein Halterungs-Verriegelungselement aufweist, welches mit wenigstens einem Gehäuse-Verriegelungselement aufseiten des Kameragehäuses zusammenwirken kann, um eine Verbindung zwischen dem wenigstens einen Halteelement und dem wenigstens einen Verbindungselement zu verriegeln, wobei wenigstens ein Halterungs-Verriegelungselement in wenigstens einem Einschubbereich angeordnet ist.

Erfindungsgemäß weist wenigstens ein Halteabschnitt wenigstens einen Einschubbereich für wenigstens ein gehäuseseitiges Verbindungselement auf. In wenigstens einem Einschubbereich ist wenigstens ein Halterungs-Verriegelungselement angeordnet. Das wenigstens eine Halterungs-Verriegelungselement ist so im Unterschied zu dem aus dem Stand der Technik bekannten Aufbau geschützt und platzsparend untergebracht. Das wenigstens eine gehäuseseitige Verbindungselement kann einfacher aufgebaut werden.

Die Halterungsbasisteil dient zur trennbaren Befestigung wenigstens eines Kameragehäuses an einem Fahrzeugteil eines Fahrzeugs. Dabei kann das Halterungsbasisteil fest mit dem Fahrzeugteil verbunden werden. Hierzu kann die Halterungsbasisteil, insbesondere der wenigstens eine Befestigungsabschnitt des wenigstens einen Halteelements, an das Fahrzeugteil geklebt oder in anderer Weise dort befestigt werden. Das wenigstens eine Kameragehäuse kann durch die trennbare Verbindung des wenigstens einen Verbindungselements mit dem des wenigstens einen Halteelement trennbar mit der Halterungsbasisteil verbunden werden. Insgesamt kann so die Halterungsbasisteil an unterschiedliche Fahrzeugteile angepasst werden. Das Halterungsbasisteil kann als eine Art Adapter zur Befestigung des wenigstens einen Kameragehäuses an dem Fahrzeugteil wirken.

Das Fahrzeugteil kann schräg zu einer Fahrzeuglängsachse montiert sein. Mithilfe des Halterungsbasisteils kann eine Neigung des Fahrzeugteils so ausgeglichen werden, dass eine Kameraachse nach Bedarf, insbesondere parallel zur Fahrzeuglängsachse, ausgerichtet werden kann.

Vorteilhafterweise kann das Fahrzeugteil, an dem das Halterungsbasisteil befestigt wird, eine Fahrzeugscheibe sein. Bei der Fahrzeugscheibe kann es sich vorteilhafterweise um eine Windschutzscheibe oder eine Heckscheibe handeln.

Vorteilhafterweise kann das Halterungsbasisteil, insbesondere wenigstens ein Halteelement, einteilig realisiert sein. Auf diese Weise kann das Halterungsbasisteil, insbesondere das wenigstens eine Halteelement, stabiler aufgebaut werden. Ein zusätzlicher Montageaufwand für eine Zusammenbau unterschiedlicher Komponenten ist nicht erforderlich.

Vorteilhafterweise kann das Halterungsbasisteil, insbesondere das wenigstens eine Halteelement, aus Kunststoff, Verbundwerkstoff, Metall und/oder einer Mischung derartiger Materialien oder dergleichen bestehen oder derartige Materialien wenigstens aufweisen. Aus Kunststoff kann das wenigstens eine Halteelement einfach hergestellt, insbesondere gespritzt oder gegossen, werden.

Die Erfindung wird bei einem Fahrzeug, insbesondere einem Kraftfahrzeug, verwendet. Vorteilhafterweise kann die Erfindung bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Die Erfindung kann auch bei Fahrzeugen eingesetzt werden, die autonom oder wenigstens teilautonom betrieben werden können. Die Erfindung ist jedoch nicht beschränkt auf Fahrzeuge. Sie kann auch im stationären Betrieb eingesetzt werden.

Das Kamerasystem kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung und/oder einem Parkassistenzsystem und oder einer Gestenerkennung oder dergleichen, verbunden oder Teil einer solchen sein. Auf diese Weise kann ein wenigstens teilweise autonomer Betrieb des Fahrzeugs ermöglicht werden.

Gemäß der Erfindung erstreckt sich wenigstens ein Halterungs-Verriegelungselement entlang einer gedachten Verriegelungsachse, die quer zu der Verbindungsachse verläuft, so dass in einer Endposition der Verbindung das wenigstens eine Halterungs-Verriegelungselement und das wenigstens eine Gehäuse-Verriegelungselement entlang der Verriegelungsachse ineinandergreifen können. Auf diese Weise können das wenigstens eine Halterungs-Verriegelungselement und das wenigstens eine Gehäuseverriegelungselement zur Verriegelung oder zum Lösen der Verriegelung relativ zueinander entlang der Verriegelungsachse quer zur Verbindungsachse bewegt werden. Eine Verriegelung-/Entriegelung-Kraftkomponente entlang der Verriegelungsachse, die zum Verriegeln oder Entriegeln erforderlich ist, kann quer zu einer Einschub-/Auszug-Kraftkomponente gerichtet sein, die erforderlich ist, um das wenigstens eine gehäuseseitige Verbindungselement in den wenigstens einen Einschubbereich zu schieben oder aus diesem herauszuziehen. So können die erforderlichen Kraftkomponenten zur Verriegelung/Entriegelung und die Kraftkomponenten zum Einschub/Auszug besser entkoppelt werden.

Bei einer weiteren vorteilhaften Ausführungsform kann sich wenigstens ein Halterungs-Verriegelungselement entlang einer gedachten Verriegelungsachse erstrecken, die quer zu einer gedachten Zugachse des wenigstens einen Halteabschnitts an dem wenigstens einen Befestigungsabschnitt verläuft. Auf diese Weise kann eine Verriegelung-/Entriegelung-Kraftkomponente entlang der Verriegelungsachse, die zum Verriegeln oder entriegeln aufgebracht werden muss, quer zu einer Halte-Kraftkomponente gerichtet sein, mit der das Kameragehäuse an dem Halterungsbasisteil gehalten wird. So können die erforderlichen Kraftkomponenten zur Verriegelung/Entriegelung und die Kraftkomponenten zum Halten des Kameragehäuses besser entkoppelt werden.

Die Kraftkomponenten zum Halten des Kameragehäuses an dem Halterungsbasisteil können im Wesentlichen durch die Schwerkraft bewirkt werden.

Bei einer weiteren vorteilhaften Ausführungsform kann wenigstens ein Halterungs-Verriegelungselement wenigstens eine Erhebung aufweisen oder daraus bestehen und/oder wenigstens ein Halterungs-Verriegelungselement kann wenigstens eine Vertiefung aufweisen oder daraus bestehen. Entsprechend kann vorteilhafterweise wenigstens ein Gehäuse-Verriegelungselement wenigstens eine Vertiefung aufweisen oder daraus bestehen und/oder wenigstens ein Gehäuse-Verriegelungselement kann wenigstens eine Erhebung aufweisen oder daraus bestehen. Auf diese Weise können das wenigstens eine Halterungs-Verriegelungselement und ein entsprechendes insbesondere komplementäres Gehäuse-Verriegelungselement formschlüssig ineinandergreifen.

Eine Erhebung kann einfach, insbesondere als Noppe, Steg, Stift oder dergleichen, realisiert werden. Eine Vertiefung kann einfach als Einschnitt, Nut, Loch oder dergleichen realisiert werden.

Bei einer weiteren vorteilhaften Ausführungsform kann wenigstens ein Halteabschnitt wenigstens einen Einschubbereich in Richtung der Verbindungsachse betrachtet seitlich begrenzen und/oder wenigstens ein Halteabschnitt kann wenigstens einen Einschubbereich auf der dem wenigstens einen Befestigungsabschnitt gegenüberliegenden Seite begrenzen. Mit einer seitlichen Begrenzung kann ein Verschieben des Kameragehäuses quer zur Verbindungsachse und/oder in Richtung einer gedachten Verriegelungsachse begrenzt werden. Mit einer Begrenzung auf der dem wenigstens einen Befestigungsabschnitt gegenüberliegenden Seite kann das Gewicht des wenigstens einen Kameragehäuses an dem Halterungsbasisteil gehalten werden.

Vorteilhafterweise kann wenigstens ein Einschubbereich in Richtung der Verbindungsachse betrachtet seitlich offen sein und/oder wenigstens ein Einschubbereich kann an einer Stirnseite offen sein. Durch eine offene Stirnseite kann wenigstens ein gehäuseseitiges Verbindungselement in den Einschubbereich eingeschoben werden. Durch eine seitliche Öffnung kann das wenigstens eine gehäuseseitige Verbindungselement in der Endposition hindurchragen.

Vorteilhafterweise kann wenigstens ein Einschubbereich in Richtung der Verbindungsachse betrachtet seitlich und an einer Stirnseite offen sein.

Bei einer weiteren vorteilhaften Ausführungsform kann wenigstens ein Halteabschnitt und/oder wenigstens ein Halterungs-Verriegelungselement zumindest quer zur Verbindungsachse elastisch bewegbar sein. Auf diese Weise können der wenigstens eine Halteabschnitt und/oder das wenigstens eine Halterungs-Verriegelungselement einerseits und wenigstens ein gehäuseseitiges Verbindungselement andererseits beim Einschieben des wenigstens ein Verbindungselements in den wenigstens einen Einschubbereich in Richtung der Verriegelungsachse voneinander weg bewegt werden, um Platz zu schaffen für das wenigstens eine Halterungs-Verriegelungselement und/oder das wenigstens eine Gehäuse-Verriegelungselement. Sobald die Endposition erreicht ist, in der das wenigstens eine Halterungs-Verriegelungselement und das wenigstens eine Gehäuse-Verriegelungselement ineinandergreifen, können der wenigstens eine Halteabschnitt und/oder das wenigstens eine Halterungs-Verriegelungselement wieder ihre ursprüngliche Form einnehmen.

Alternativ oder zusätzlich kann vorteilhafterweise wenigstens ein Verbindungselement quer zur Verbindungsachse elastisch bewegbar sein.

Bei einer weiteren vorteilhaften Ausführungsform kann wenigstens ein Halteelement wenigstens einen Anschlag aufweisen, welcher den wenigstens einen Einschubbereich in Einschubrichtung des wenigstens einen gehäuseseitigen Verbindungselements in den wenigstens einen Einschubbereich betrachtet begrenzt. Auf diese Weise kann verhindert werden, dass das wenigstens eine Verbindungselement über seine Endposition hinaus geschoben werden kann.

Vorteilhafterweise können wenigstens ein Anschlag und wenigstens ein Halteabschnitt relativ zueinander elastisch bewegbar sein. Auf diese Weise kann der wenigstens eine Halteabschnitt getrennt von dem wenigstens einen Anschlag elastisch bewegt werden. Auf diese Weise kann die Montage vereinfacht werden.

Vorteilhafterweise kann zwischen dem wenigstens einen Anschlag und dem wenigstens einen Halteabschnitt ein Trennspalt vorgegeben sein. Auf diese Weise können der wenigstens eine Anschlag und der wenigstens eine Halteabschnitt getrennt voneinander elastisch bewegt werden.

Bei einer weiteren vorteilhaften Ausführungsform kann wenigstens ein Halteelement wenigstens ein Führungselement aufweisen, welches auf der dem wenigstens einen Befestigungsabschnitt zugewandten Seite des wenigstens einen Einschubbereichs angeordnet ist. Mit dem wenigstens einen Führungselement kann das wenigstens eine gehäuseseitige Verbindungselement beim Einschieben in den wenigstens einen Einschubbereich geführt werden.

Vorteilhafterweise kann wenigstens ein Halteelement auf einer Außenseite wenigstens einen Überpressungsbereich aufweisen. In dem Überpressungsbereich kann das wenigstens eine Halteelement elastisch verformbar sein. Auf diese Weise kann mithilfe eines entsprechenden Pressbereichs aufseiten des wenigstens einen Kameragehäuses mit dem Überpressungsbereich eine Überpressung realisiert werden. So kann die Verbindung des wenigstens einen Halteelements mit dem wenigstens einen Verbindungselements zusätzlich stabilisiert werden.

Vorteilhafterweise kann wenigstens ein Überpressungsbereich an dem Befestigungsabschnitt angeordnet sein. Auf diese Weise kann sich ein entsprechender gehäuseseitiger Pressbereich gegen den Überpressungsbereich stützen und so das wenigstens eine gehäuseseitige Verbindungselement gegen einen Teil des wenigstens einen Halteabschnitts drücken, welcher den wenigstens einen Einschubbereich auf der dem wenigstens einen Befestigungsabschnitt gegenüberliegenden Seite begrenzt.

Vorteilhafterweise können wenigstens zwei Halteelemente mit ihren jeweiligen Befestigungsabschnitten über einen gemeinsamen Basis-Befestigungsabschnitt miteinander verbunden sein. Auf diese Weise kann das wenigstens eine Kameragehäuse an unterschiedlichen Stellen gehalten werden.

Vorteilhafterweise kann das Halterungsbasisteil wenigstens zwei Halteelemente aufweisen, deren Verbindungsachsen parallel verlaufen. Auf diese Weise kann das Kameragehäuse mit einer geraden Einschubbewegung entlang der Verbindungsachsen mit der Halterungsbasisteil verbunden werden.

Dadurch, dass die wenigstens zwei Halteelemente an dem gemeinsamen Basisbefestigungsabschnitt miteinander verbunden sind, können sie gemeinsam an Fahrzeugteil befestigt werden. Ferner wird durch den gemeinsamen Basis-Befestigungsabschnitt gewährleistet, dass die Orientierungen und/oder Entfernungen der wenigstens zwei Halteelemente relativ zueinander fest vorgegeben werden können.

Vorteilhafterweise können die Befestigungsabschnitte der Halteelemente und des Basis-Befestigungsabschnitts als einstückig realisiert sein. So kann der Basis-Befestigungsabschnitt gleichzeitig als jeweiliger Befestigungsabschnitt für die entsprechenden Halteelemente wirken. Die Halteelemente können also mittels ihrer Befestigungsabschnitte und dem Basis-Befestigungsabschnitt an dem Fahrzeugteil befestigt werden.

Bei einer weiteren vorteilhaften Ausführungsform können wenigstens zwei Halteelemente mit ihren jeweiligen Befestigungsabschnitten über einen gemeinsamen Basis-Befestigungsabschnitt so miteinander verbunden sein, dass sie in Richtung ihrer Verbindungsachsen betrachtet hintereinander oder schräg hintereinander angeordnet sind. Auf diese Weise können die Haltekräfte zum Halten des wenigstens einen Kameragehäuses an dem Halterungsbasisteil auf mehrere, hintereinander liegende Stellen verteilt werden.

Vorteilhafterweise können zwei Paare mit jeweils wenigstens zwei hintereinander oder schräg hintereinander liegenden Halteelementen nebeneinander angeordnet sein. Auf diese Weise kann das Kameragehäuse an wenigstens vier Stellen über das Halterungsbasisteil an dem Fahrzeugteil gehalten werden.

Bei einer weiteren vorteilhaften Ausführungsform können wenigstens zwei Halteelemente mit ihren jeweiligen Befestigungsabschnitten über einen gemeinsamen Basis-Befestigungsabschnitt so miteinander verbunden sein, dass ihre Verbindungsachsen von dem Basis-Befestigungsabschnitt aus betrachtet auf gleicher Höhe parallel zueinander verlaufen und/oder wenigstens zwei Halteelemente mit ihren jeweiligen Befestigungsabschnitten über einen gemeinsamen Basis-Befestigungsabschnitt so miteinander verbunden sein, dass ihre Verbindungsachsen von dem Basis-Befestigungsabschnitt aus betrachtet in unterschiedlicher Höhe parallel zueinander verlaufen. Auf diese Weise kann insgesamt mithilfe des Halterungsbasisteils eine Neigung des Fahrzeugteils ausgeglichen werden, um eine Kameraachse auszurichten.

Ferner wird die Aufgabe erfindungsgemäß bei dem Kameragehäuse dadurch gelöst, dass wenigstens ein Verbindungselement wenigstens einen Verbindungsflügel aufweist, welcher in einen Einschubbereich wenigstens eines Halteelements aufseiten der Halterungsbasisteil eingeschoben werden kann, wobei an dem wenigstens einen Verbindungsflügel wenigstens ein Gehäuse-Verriegelungselement angeordnet ist.

Erfindungsgemäß ist wenigstens ein Gehäuse-Verriegelungselement an einem Verbindungsflügel eines Verbindungselements angeordnet.. Das wenigstens eine Gehäuse-Verriegelungselement kann mit dem Verbindungsflügel in den Einschubbereich des wenigstens einen Halterungselements eingeschoben werden. So kann das wenigstens eine Gehäuse-Verriegelungselement mit wenigstens einem Halterungs-Verriegelungselement des wenigstens einen Halterungselements zusammenwirken. Das wenigstens eine Halterungs-Verriegelungselement kann dabei in dem wenigstens einen Einschubbereich des wenigstens einen Halterungselements angeordnet sein kann.

Bei einer vorteilhaften Ausführungsform kann sich wenigstens ein Gehäuse-Verriegelungselement entlang einer gedachten Verriegelungsachse erstrecken, die quer zu der Verbindungsachse des wenigstens einen gehäuseseitigen Verbindungselements in den wenigstens einen Einschubbereich verläuft, so dass das wenigstens eine Halterungs-Verriegelungselement und das wenigstens eine Gehäuse-Verriegelungselement entlang der Verriegelungsachse ineinandergreifen können. Auf diese Weise können das wenigstens eine Halterungs-Verriegelungselement und das wenigstens eine Gehäuse-Verriegelungselement zur Verriegelung oder zum Lösen der Verriegelung relativ zueinander entlang der Verriegelungsachse quer zur Verbindungsachse bewegt werden.

Bei einer vorteilhaften Ausführungsform kann wenigstens ein Gehäuse-Verriegelungselement wenigstens eine Vertiefung aufweisen oder daraus bestehen und/oder wenigstens ein Gehäuse-Verriegelungselement kann wenigstens eine Erhebung aufweisen oder daraus bestehen. Auf diese Weise können das wenigstens eine Gehäuse-Verriegelungselement und ein entsprechendes insbesondere komplementäres Halterungs-Verriegelungselement ineinandergreifen.

Bei einer weiteren vorteilhaften Ausführungsform kann wenigstens ein Verbindungselement wenigstens eine Presserhebung aufweisen. Mit einer Presserhebung kann mit einem entsprechenden elastisch verformbaren Überpressungsbereich aufseiten wenigstens eines Halteelements eine Überpressung realisiert werden. So kann die Verbindung zwischen dem wenigstens einen Halteelement und dem wenigstens einen Verbindungselement weiter stabilisiert werden.

Vorteilhafterweise kann sich wenigstens eine Presserhebung quer zu wenigstens einem Verbindungsflügel erstrecken. Auf diese Weise kann mithilfe der Presskraft, die durch die Überpressung realisiert wird, der wenigstens eine Verbindungsflügel gegen wenigstens einen Halteabschnitt des wenigstens eine Halteelements gedrückt werden. So kann die Verbindung weiter stabilisiert werden.

Vorteilhafterweise können wenigstens zwei Verbindungselemente so an dem Kameragehäuse angeordnet sein, dass ihre jeweiligen Verbindungsachsen parallel zueinander verlaufen. Auf diese Weise können die wenigstens zwei Verbindungselemente mit einer geraden Bewegung in die entsprechenden Einschubbereiche der entsprechenden Halteelemente eingeschoben werden.

Vorteilhafterweise können wenigstens zwei Verbindungselemente in Richtung ihrer Verbindungsachsen betrachtet hintereinander oder schräg hintereinander angeordnet sein. Auf diese Weise können mehrere Befestigungsstellen auf derselben Seite des wenigstens einen Kameragehäuses realisiert werden.

Bei einer weiteren vorteilhaften Ausführungsform können wenigstens zwei Verbindungselemente so an dem Kameragehäuse angeordnet sein, dass ihre Verbindungsachsen von der Seite, von der das Halterungsbasisteil angeordnet wird, aus betrachtet auf gleicher Höhe parallel zueinander verlaufen und/oder wenigstens zwei Verbindungselemente so an dem Kameragehäuse angeordnet sein, dass ihre Verbindungsachsen von der Seite, von der das Halterungsbasisteils angeordnet wird, aus betrachtet in unterschiedlicher Höhe parallel zueinander verlaufen. Auf diese Weise kann insgesamt mithilfe des Halterungsbasisteils eine Neigung des Fahrzeugteils ausgeglichen werden, um eine Kameraachse auszurichten.

Die Aufgabe wird außerdem erfindungsgemäß bei dem Kamerasystem dadurch gelöst, dass wenigstens ein Halterungsbasisteil wenigstens ein erfindungsgemäßes Halteelement aufweist und wenigstens ein Kameragehäuse wenigstens ein erfindungsgemäßes Verbindungselement aufweist.

Im Übrigen gelten die im Zusammenhang mit dem erfindungsgemäßen Halterungsbasisteil, dem erfindungsgemäßen Kameragehäuse und dem erfindungsgemäßen Kamerasystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: ein Kraftfahrzeug mit einem Kamerasystem, welches an einer Frontscheibe des Kraftfahrzeugs befestigt ist;
- Figur 2: eine isometrische Darstellung des Kamerasystems aus der Figur 1 in der Vorderansicht, mit einem Kameragehäuse und einem Halterungsbasisteil, mit dem das Kameragehäuse an der Frontscheibe montiert wird;
- Figur 3: das Kamerasystem aus den Figuren 1 und 2 in einer Ansicht schräg von der Seite;
- Figur 4: das Kamerasystem aus den Figuren 1 bis 3 in einer Ansicht schräg von hinten;
- Figur 5: das Kamerasystem aus den Figuren 1 bis 4 in einer Ansicht von oben;
- Figur 6: das Kamerasystem aus den Figuren 1 bis 5 in eine Ansicht von unten;
- Figur 7: eine erste Detailansicht des Kamerasystems aus den Figuren 1 bis 6 im Bereich eines hinteren Halteelements eines Halterungsbasisteils und eines hinteren Verbindungselements eines Kameragehäuses des Kamerasystems an der Fahrzeugscheibe in einer Ansicht von hinten;
- Figur 8: eine zweite Detailansicht des Kamerasystems aus der Figur 7 in einer Ansicht von der Seite;
- Figur 9: eine dritte Detailansicht des Kamerasystems aus der Figur 7 in einer Ansicht von hinten;
- Figur 10: eine vierte Detailansicht des Kamerasystems aus der Figur 7 in einer Ansicht von oben;
- Figur 11: eine Detailansicht des Halterungsbasisteils des Kamerasystems aus den Figuren 1 bis 10 im Bereich eines hinteren Verbindungselements in einer Ansicht von oben;
- Figur 12: das Halterungsbasisteil des Kamerasystems aus den Figuren 1 bis 10 in einer Ansicht von unten;
- Figur 13: eine isometrische Darstellung des Kameragehäuses des Kamerasystems aus den Figuren 1 bis 10 in einer Ansicht von schräg vorne.

In den Figuren sind gleiche Bauteile mit gleichen Bezugszeichen versehen.

### Ausführungsform(en) der Erfindung

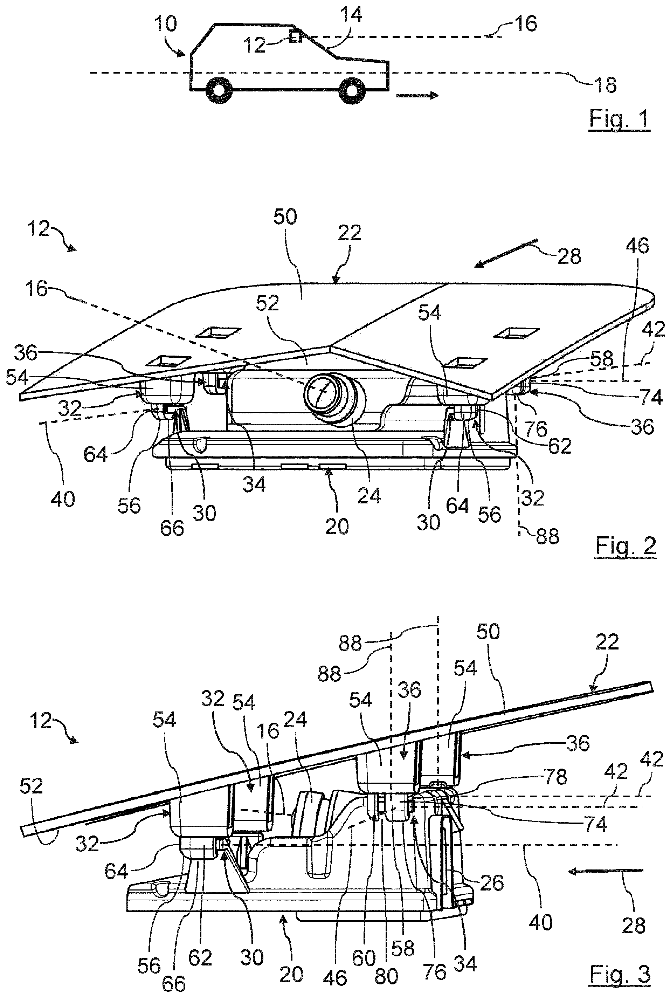

In der Figur 1 ist ein Kraftfahrzeug 10 beispielsweise in Form eines Personenkraftwagens schematisch gezeigt. Das Kraftfahrzeug 10 verfügt über ein Kamerasystem 12. Das Kamerasystem 12 ist an einem Fahrzeugteil, beispielhaft an einer Innenseite einer stark geneigten Fahrzeugscheibe 14, beispielsweise einer Frontscheibe, befestigt. Eine gedachte Kameraachse 16 des Kamerasystems 12 ist beispielhaft parallel zu einer gedachten Fahrzeuglängsachse 18 ausgerichtet.

Mit dem Kamerasystem 12 kann ein Überwachungsbereich in Fahrtrichtung des Kraftfahrzeugs 10 vor dem Kraftfahrzeug 10 erfasst werden. Das Kamerasystem 12 kann statt an der Frontscheibe auch an einem anderen Fahrzeugteil des Kraftfahrzeugs 10, beispielsweise einer Heckscheibe, einer Seitenscheibe oder an einer Innenseite eines Daches des Kraftfahrzeugs 10, befestigt und/oder in eine andere Richtung ausgerichtet sein.

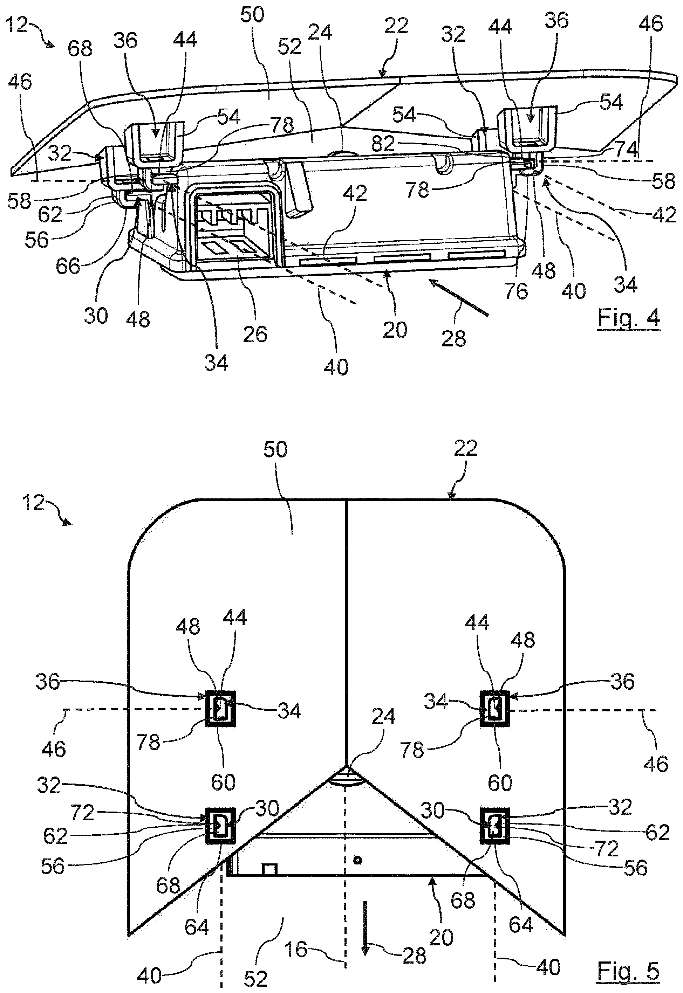

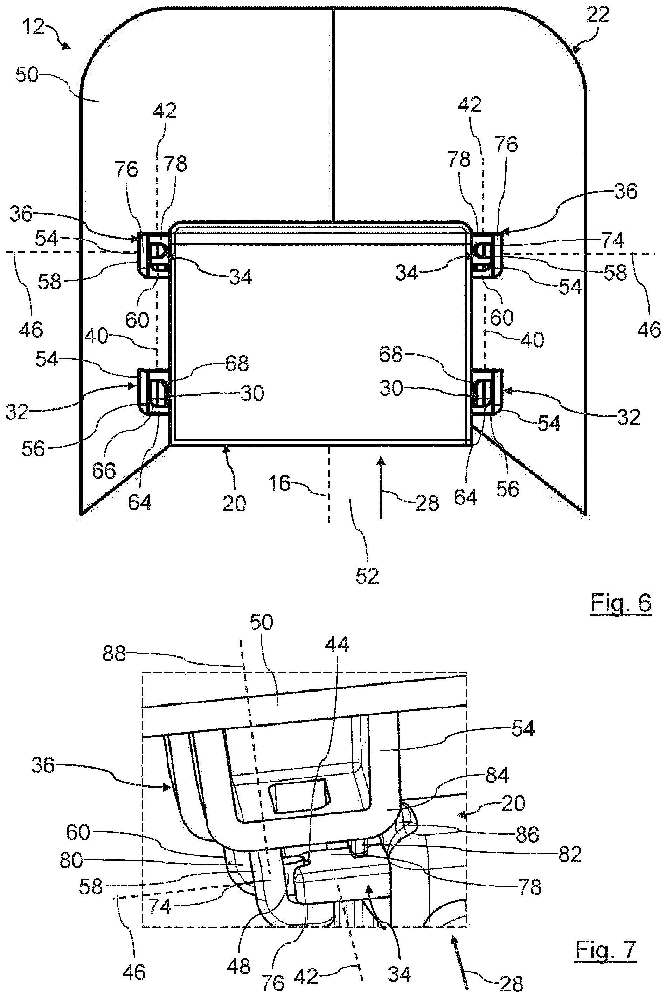

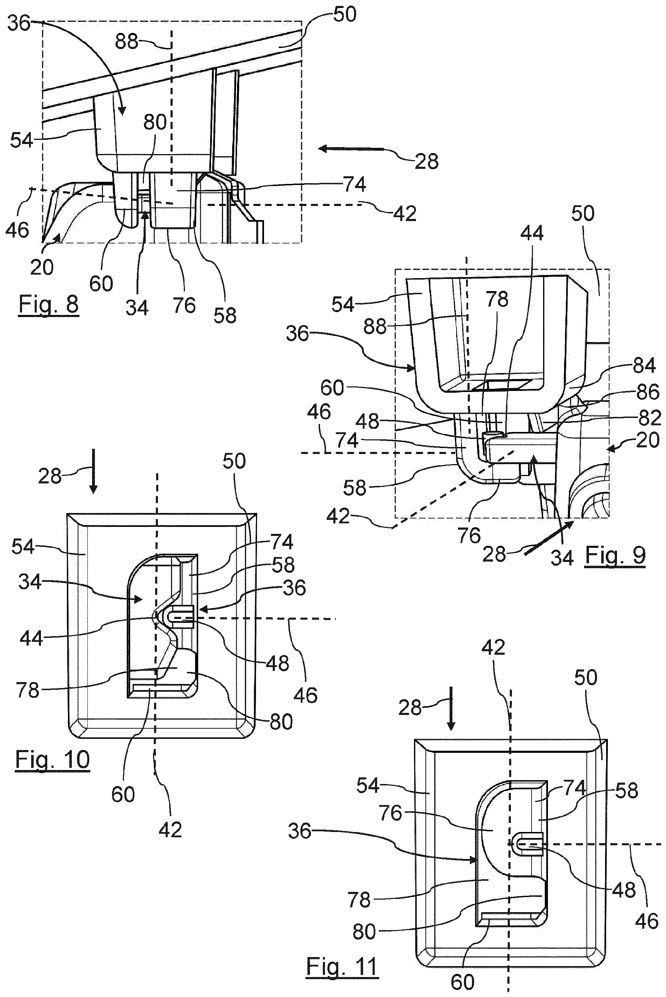

In den Figuren 2 bis 13 ist das Kamerasystem 12 in unterschiedlichen Perspektiven und Detailansichten gezeigt.

Das Kamerasystem 12 umfasst ein Kameragehäuse 20 und eine Halterungsbasisteil 22. Mit dem Halterungsbasisteil 22 ist das Kameragehäuse 20 an der Fahrzeugscheibe 14 befestigt.

Das Kameragehäuse 20 beinhaltet eine hier nicht weiter interessierende Kamera mit einem Objektiv 24 an der Vorderseite. Beispielhaft entspricht eine Objektivachse des Objektivs 24 der Kameraachse 16. Auf der Rückseite weist das Kameragehäuse 20 einen elektrischen Anschlussstecker 30 auf. Über den Anschlussstecker 30 können elektrische Kabel angeschlossen werden, welche zu einer Steuer- und Auswerteeinheit des Kraftfahrzeugs 10, beispielsweise einem Fahrerassistenzsystem, führen.

Wenn im Folgenden von "Vorderseite", "Rückseite", "vorne", "hinten", "vorderer", "hinterer" oder dergleichen die Rede ist, so bezieht sich dies, sofern nicht anders erwähnt, auf eine Einschubrichtung 28 des Kameragehäuses 20 in das Halterungsbasisteil 22.

Wenn im Folgenden von "oben", "unten", "seitlich" oder dergleichen die Rede ist, bezieht sich dies, sofern nicht anders erwähnt, auf die Montage des Kamerasystems 12 an der Fahrzeugscheibe 14, bei der das Kamerasystem 12 räumlich unten an der Innenseite des Fahrzeugscheibe 14 hängt. "Oben" ist demnach die Seite des Kamerasystems 12, die der Fahrzeugscheibe 14 zugewandt ist. "Unten" ist die Seite des Kamerasystems 12, die der Fahrzeugscheibe 14 abgewandt ist.

Das Kameragehäuse 20 weist auf bezüglich der Kameraachse 16 gegenüberliegenden Seiten zwei vordere Verbindungselemente 30 auf. Mit den vorderen Verbindungselementen 30 ist das Kameragehäuse 20 trennbar mit entsprechenden vorderen Halteelementen 32 des Halterungsbasisteils 22 verbunden.

Ferner weist das Kameragehäuse 20 auf den bezüglich der Kameraachse 16 gegenüberliegenden Seiten zwei hintere Verbindungselemente 34 auf. Mit den hinteren Verbindungselementen 34 ist das Kameragehäuse 20 trennbar mit entsprechenden hinteren Halteelementen 36 des Halterungsbasisteils 22 verbunden.

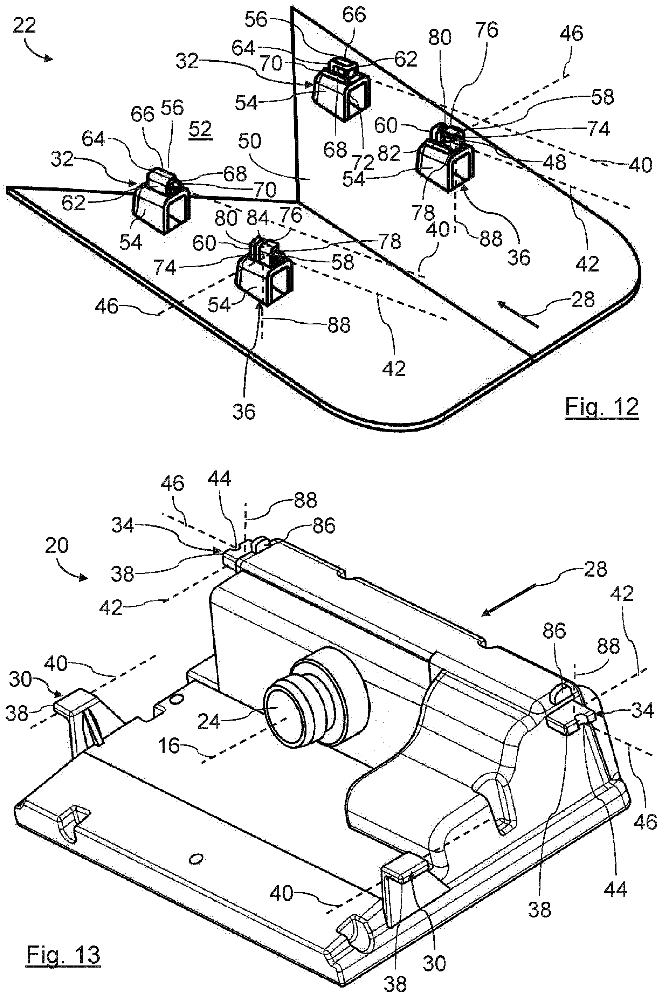

Die hinteren Verbindungselemente 34 sind in Einschubrichtung 28 betrachtet jeweils hinter den vorderen Verbindungselementen 30 angeordnet. Die Verbindungselemente 30 und 34 sind beispielsweise in der Figur 13 gezeigt.

Die vorderen Verbindungselemente 30 und die hinteren Verbindungselemente 34 sind jeweils als ebene Verbindungsflügel ausgestaltet. Die Verbindungselemente 30 und 34 erstrecken sich jeweils von dem Kameragehäuse 20 seitlich nach außen weg. Die Verbindungselemente 30 und 34 weisen vorne an ihrer jeweiligen Außenseite jeweils eine Einführschräge 38 auf.

Die vorderen Verbindungselemente 30 erstrecken sich entlang einer jeweiligen gedachten vorderen Verbindungsachse 40. Die hinteren Verbindungselemente 34 erstrecken sich entlang einer jeweiligen hinteren Verbindungsachse 42. Die vorderen Verbindungselemente 30 können zum Verbinden des Kameragehäuses 20 mit dem Halterungsbasisteils 22 entlang der jeweiligen vorderen Verbindungsachse 40 in die jeweiligen vorderen Halteelemente 32 eingeschoben werden. Die hinteren Verbindungselemente 34 können zum Verbinden des Kameragehäuses 20 mit dem Halterungsbasisteil 22 entlang der jeweiligen hinteren Verbindungsachse 42 in die jeweiligen hinteren Halteelemente 36 eingeschoben werden.

Die Verbindungsachsen 40 und 42 verlaufen parallel zueinander. Die vorderen Verbindungsachsen 40 verlaufen von dem Halterungsbasisteil 22, respektive einem weiter unten näher erläuterten Basis-Befestigungsabschnitt 50, aus betrachtet in gleicher Höhe. Entsprechend verlaufen die hinteren Verbindungsachsen 42 in gleicher Höhe. Die vorderen Verbindungselemente 30 und die vorderen Verbindungsachsen 40 sind von dem Halterungsbasisteils 22, respektive dem Basis-Befestigungsabschnitt 50, aus betrachtet, bezogen auf die Kameraachse 16, tiefer angeordnet als die jeweiligen hinteren Verbindungselemente 34 und die hinteren Verbindungsachse und 42. Die vorderen Verbindungselemente 30 und die hinteren Verbindungselemente 34 sind also in unterschiedlichen Höhen angeordnet. Im gezeigten Ausführungsbeispiel sind, wie beispielsweise in der Figur 3 erkennbar ist, die hinteren Verbindungsachsen 42 oberhalb der Kameraachse 16 angeordnet. Die vorderen Verbindungsachsen 40 sind unterhalb der Kamera 16 angeordnet. Auf diese Weise kann die Neigung der Fahrzeugscheibe 14 so ausgeglichen werden, dass die Kameraachse 16 beispielhaft etwa parallel zur Fahrzeuglängsachse 18 verläuft.

Die hinteren Verbindungselemente 34 verfügen ferner jeweils über ein Gehäuse-Verriegelungselement 44. Die Gehäuse-Verriegelungselemente 44 sind beispielhaft als Vertiefungen ausgestaltet. Die Gehäuse-Verriegelungselemente 44 befinden sich auf der der Kameraachse 16 abgewandten Außenseite des jeweiligen hinteren Verbindungselements 34. Die Gehäuse-Verriegelungselemente 44 erstrecken sich entlang einer jeweiligen gedachten Verriegelungsachse 46. Die Verriegelungsachsen 46 erstrecken sich quer zu den jeweiligen hinteren Verbindungsachsen 42. Entlang der Verriegelungsachsen 46 greifen entsprechende Halterungs-Verriegelungselemente 48 aufseiten der hinteren Halteelemente 36 zur Verriegelung der Verbindung in die entsprechenden Gehäuse-Verriegelungselemente 44 ein.

Das Halterungsbasisteil 22 weist einen plattenförmigen Basis-Befestigungsabschnitt 50 auf. Der Basis-Befestigungsabschnitt 50 weist vorne eine V-förmige Sichtöffnung 52 für das Objektiv 24 der Kamera des Kamerasystems 12 auf.

Auf der dem Kameragehäuse 20 zugewandten Seite erheben sich insgesamt vier Befestigungsabschnitte 54. Die Befestigungsabschnitte 54 sind einstückig mit dem Halterungsbasisteils 22 realisiert. Jeder der Befestigungsabschnitte 54 gehört zu einem der Halteelemente 32 beziehungsweise 36.

Die vorderen Halteelemente 32 sind bezüglich einer gedachten Symmetrieebene symmetrisch aufgebaut und angeordnet. Die Symmetrieebene erstreckt sich parallel zu der Einschubrichtung 28 und beispielhaft senkrecht zur Ausdehnung des Basis-Befestigungsabschnitts 50. Die hinteren Halteelemente 36 sind ebenfalls bezüglich der gedachten Symmetrieebene symmetrisch aufgebaut und angeordnet.

Die Befestigungsabschnitte 54 sind hohl. Sie haben in Einschubrichtung 28 betrachtet jeweils ein etwa U-förmiges Profil. Die Befestigungsabschnitte 54 sind vorne geschlossen und hinten offen. Innerhalb der Befestigungsabschnitte 54 weist der Basis-Befestigungsabschnitt 50 eine durchgängige Öffnung auf.

Auf ihren dem Basis-Befestigungsabschnitt 54 abgewandten Seiten gehen die vorderen Befestigungsabschnitte 54 jeweils einstückig in Halteabschnitte 56 der vorderen Halteelemente 32 über.

Die hinteren Befestigungsabschnitte 54 gehen jeweils einstückig auf der dem jeweils anderen hinteren Befestigungsabschnitte 54 gegenüberliegenden äußeren Seite in seitliche Halteabschnitte 58 und vorne in Anschläge 60 über. Die seitlichen Halteabschnitte 58 und die Anschläge 60 sind jeweils Teil des jeweiligen hinteren Halteelements 36.

Die Halteabschnitte 56 der vorderen Halteelemente 32 weisen jeweils einen seitlichen Bereich 62, der sich auf der dem jeweils anderen vorderen Halteelement 32 gegenüberliegenden Seite befindet, einen vorderen Bereich, welcher als Anschlag 64 dient, und einen unteren Bereich 66 auf. Der seitliche Bereich 62, der Anschlag 64, der untere Bereich 66 und der entsprechende Befestigungsabschnitt 54 begrenzen einen vorderen Einschubbereich 68 des entsprechenden vorderen Halteelements 32. Auf der dem seitlichen Bereich 62 und dem Anschlag 64 jeweils gegenüberliegenden Seite ist der vordere Einschubbereich 68 offen.

Ferner weisen die vorderen Halteelemente 32 jeweils einen Führungssteg 70 auf, welcher sich entlang der entsprechenden vorderen Verbindungsachse 40 von dem jeweiligen Befestigungsabschnitt 54 in den vorderen Einschubbereich 68 erstreckt.

Außerdem ist innen an dem seitlichen Bereich 62 ein seitliches Führungselement 72 angeordnet, welches sich in Richtung der Verriegelungsachse 46 in den vorderen Einschubbereich 68 erstreckt.

In die vorderen Einschubbereiche 68 können die jeweiligen vorderen Verbindungselemente 30 entlang der jeweiligen vorderen Verbindungsachse 40 eingeschoben werden.

Die seitlichen Halteabschnitte 58 der hinteren Halteelemente 36 gehen oben jeweils einstückig in den entsprechenden Befestigungsabschnitt 54 und unten einstückig in einen seitlichen Bereich 74 über. Der seitliche Bereich 74 geht einstückig in einen unteren Bereich 76 über.

Der seitliche Bereich 74, der untere Bereich 76, der Anschlag 60 und der Befestigungsabschnitt 54 eines hinteren Halteelements 36 begrenzen einen jeweiligen hinteren Einschubbereich 78. Auf der dem seitlichen Bereich 74 gegenüberliegenden Seite und auf der dem Anschlag 60 gegenüberliegenden hinteren Seite ist der hintere Einschubbereich 78 offen.

Ferner weisen die seitlichen Halteabschnitte 58 der hinteren Halteelemente 36 jeweils auf ihren dem jeweils anderen hinteren Halteelement 36 zugewandten Innenseite ein Halterungs-Verriegelungselement 48. Die Halterungs-Verriegelungselemente 48 sind beispielhaft Erhebungen. Die Halterungs-Verriegelungselemente 48 erstrecken sich jeweils entlang der entsprechenden Verriegelungsachse 46 quer zur entsprechenden hinteren Verbindungsachse 42 in den entsprechenden hinteren Einschubbereich 78.

Zwischen dem Anschlag 60 und dem hinteren seitlichen Halteabschnitt 58 der hinteren Halteelemente 36 ist jeweils ein Trennspalt 80 vorgesehen. Der seitliche Halteabschnitt 28 kann so getrennt von dem Anschlag 60 in Richtung der Verriegelungsachse 46 elastisch nach außen gebogen werden.

Außerdem weisen die hinteren Halteelemente 36 jeweils ein Führungselement 82 beispielhaft in Form eines Führungsstegs auf. Die Führungselemente 82 sind jeweils auf der dem Befestigungsabschnitt 54 zugewandten Seite des entsprechenden hinteren Einschubbereichs 78 angeordnet. Sie befinden sich somit auf der dem jeweiligen unteren Bereich 76 gegenüberliegenden Seite des hinteren Einschubbereichs 78. Die Führungselemente 82 erstrecken sich jeweils entlang der entsprechenden hinteren Verbindungsachse 42 von dem jeweiligen Befestigungsabschnitt 54 weg in den hinteren Einschubbereich 78. Die Führungselemente 82 dienen der Führung der jeweiligen hinteren Verbindungselemente 34 beim Einschieben in die entsprechenden hinteren Einschubbereiche 78.

Des Weiteren weisen die Befestigungsabschnitte 54 der hinteren Halteelemente 36 im Bereich der äußeren Oberfläche jeweils eine Überpressungsbereich 84 auf. Die Überweisungsbereiche 84 befinden sich auf den dem jeweils anderen hinteren Halteelement 36 zugewandten Seite der Befestigungsabschnitte 54. In den Überpressungsbereichen 84 sind die Befestigungsabschnitte 54 zumindest an der äußeren Oberfläche elastisch verformbar. Die Überpressungsbereiche 84 werden bei montiertem Kamerasystem 12 mit jeweiligen Presserhebungen 86 des Kameragehäuses 20 verpresst, sodass eine Überpressung entsteht. Die Presserhebungen 86 befinden sich schräg oberhalb der jeweiligen hinteren Verbindungselemente 34 auf der den jeweiligen Gehäuse-Verriegelungselementen 44 gegenüberliegenden Seite.

Zur Befestigung des Kamerasystems 12 an der Fahrzeugscheibe 14 wird zunächst das Halterungsbasisteil 22 mit der den Halteelementen 32 und 36 abgewandten Oberseite auf die Innenseite der Fahrzeugscheibe 15 befestigt, beispielsweise geklebt. Dabei wird die V-förmige Sichtöffnung 52 in Fahrtrichtung des Kraftfahrzeugs 10 ausgerichtet.

Anschließend wird das Kameragehäuse 20 so platziert, dass sich das Objektiv 24 auf der der Sichtöffnung 52 zugewandten Seite, die jeweiligen vorderen Verbindungselemente 30 vor den hinteren Öffnungen der vorderen Einschubbereiche 68 und die jeweiligen hinteren Verbindungselemente 34 vor den vorderen Öffnungen der hinteren Einschubbereiche 78 befinden.

Dann wird das Kameragehäuse 20 mit einer geraden Bewegung in Einschubrichtung 28 bewegt, sodass die vorderen Verbindungselemente 30 entlang der jeweiligen vorderen Verbindungsachse 40 in die jeweiligen vorderen Einschubbereiche 68 und die hinteren Verbindungselemente 34 entlang der jeweiligen hinteren Verbindungsachse 42 in die hinteren Einschubbereiche 78 gleiten. Dabei werden die hinteren Verbindungselemente 34 jeweils mithilfe der entsprechenden Führungselemente 82 in den hinteren Einschubbereichen 78 und die vorderen Verbindungselemente 30 jeweils mithilfe der entsprechenden Führungsstege 70 in den vorderen Einschubbereich 68 geführt.

Ferner werden die Halterungs-Verriegelungselemente 48 mithilfe der Einführschrägen 38 der hinteren Verbindungselemente 34 nach außen gedrückt, indem die jeweiligen seitlichen Halteabschnitte 58 der hinteren Halteelemente 36 elastisch nach außen gebogen werden.

Sobald das Kameragehäuse 20 seine, in den Figuren 2 bis 10 gezeigte, Endposition an dem Halterungsbasisteil 22 erreicht, stoßen die in Einbaurichtung 28 betrachtet vorderen Seiten der vorderen Verbindungselemente 30 gegen die jeweiligen Anschläge 64 der vorderen Halteelemente 32. Außerdem stoßen die vorderen Seiten der hinteren Verbindungselemente 34 gegen die jeweiligen Anschläge 60 der hinteren Halteelemente 36. Ein Weiterschieben des Kameragehäuses 20 wird so verhindert.

Ferner greifen in der Endposition die Halterungs-Verriegelungselemente 48 entlang der jeweiligen Verriegelungsachse 46 in die jeweiligen Gehäuse-Verriegelungselemente 44 ein, sodass sich die jeweiligen hinteren seitlichen Halteabschnitte 58 wieder entspannen können. Durch die Verriegelung wird verhindert, dass das Kameragehäuse 20 ungewollt wieder aus dem Halterungsbasisteil 22 herausrutschen kann.

Außerdem pressen die jeweiligen Presserhebungen 86 gegen die jeweiligen Überpressbereiche 84 der hinteren Halteelemente 36 und bilden so eine Überpressung. Mithilfe der Überpressung wird die Verriegelung der hinteren Halteelemente 36 mit den hinteren Verbindungselementen 34 verbessert.

Die Verriegelungsachsen 46 sind quer zur Einbaurichtung 28 und somit quer zur entsprechenden Einbaukräften zum Einschieben und Zugkräften zum Herausziehen und Lösen der Verbindung gerichtet. Außerdem verlaufen die Verriegelungsachsen 46 jeweils quer zu jeweiligen gedachten Zugachsen 88 der Halteabschnitte 58 an den jeweiligen Befestigungsabschnitten 54. Auf diese Weise verlaufen die Verriegelungsachsen 46 auch quer zur entsprechenden Haltekräften des Kameragehäuses 20 an dem Halterungsbasisteil 22, welche zumindest bei stehendem Fahrzeug 10 durch die Schwerkraft hervorgerufen werden. Auf diese Weise können Kräfte, welche zu Herstellung und zum Lösen der Verbindung zwischen dem Kameragehäuse 20 und dem Halterungsbasisteil 22 erforderlich sind, Kräfte, die zur Verriegelung oder Entriegelung der Verbindung erforderlich sind, und Haltekräfte, mit denen das Kameragehäuse 20 an dem Halterungsbasisteil 22 gehalten wird, besser entkoppelt und verteilt werden.

Zum Lösen der Verbindung, also zum Trennen des Kameragehäuses 20 von dem Halterungsbasisteil 22 und somit auch von der Fahrzeugscheibe 14, werden die Verbindungselemente 30 und 34 des Kameragehäuses 20 entgegen der Einschubrichtung 28 aus den Halteelementen 32 und 36 des Halterungsbasisteils 22 gezogen. Dazu ist zunächst ein erhöhter Kraftaufwand erforderlich, um die Verriegelungen zwischen den Halterungs-Verriegelungselementen 48 und den jeweiligen Gehäuse-Verriegelungselementen 44 zu lösen. Das Halterungsbasisteil 22 kann dabei an der Fahrzeugscheibe 14 verbleiben.

Bei einer nicht gezeigten Ausführungsform können auch die vorderen Halteelemente 32 Halterungs-Verriegelungselemente 48 aufweisen. Entsprechend können die vorderen Verbindungselemente 30 Gehäuse-Verriegelungselemente 44 aufweisen.

## Patentansprüche

1. Halterungsbasisteil (22) zur Befestigung wenigstens eines Kameragehäuses (20) an einem Fahrzeugteil (14) eines Fahrzeugs (10), mit wenigstens einem Halteelement (32, 36), das wenigstens einen Befestigungsabschnitt (54) aufweist, mit dem das wenigstens eine Halteelement (32, 36) direkt oder indirekt an dem Fahrzeugteil (14) befestigt werden kann, und das wenigstens einen Halteabschnitt (56, 58) aufweist, mit dem das wenigstens eine Halteelement (32, 36) mittels einer Schiebebewegung entlang einer gedachten Verbindungsachse (40, 42) mit wenigstens einem Verbindungselement (30, 34) aufseiten des wenigstens einen Kameragehäuses (20) trennbar verbunden werden kann, wobei wenigstens ein Halteabschnitt (56, 58) wenigstens einen Einschubbereich (68, 78) wenigstens mit begrenzt, in den das wenigstens eine gehäuseseitige Verbindungselement (30, 34) zur trennbaren Verbindung mit dem wenigstens einen Halteelement (32, 36) eingeschoben werden kann, wenigstens ein Halteelement (36) wenigstens ein Halterungs-Verriegelungselement (48) aufweist, welches mit wenigstens einem Gehäuse-Verriegelungselement (44) aufseiten des Kameragehäuses (20) zusammenwirken kann, um eine Verbindung zwischen dem wenigstens einen Halteelement (36) und dem wenigstens einen Verbindungselement (34) zu verriegeln, wobei wenigstens ein Halterungs-Verriegelungselement (48) in wenigstens einem Einschubbereich (78) angeordnet ist, **dadurch gekennzeichnet, dass** wenigstens ein Halteabschnitt (58) und/oder wenigstens ein Halterungs-Verriegelungselement (48) zumindest quer zur Verbindungsachse (42) elastisch bewegbar ist, wobei
sich wenigstens ein Halterungs-Verriegelungselement (48) entlang einer gedachten Verriegelungsachse (46) erstreckt, die quer zu der Verbindungsachse (42) verläuft, so dass in einer Endposition der Verbindung das wenigstens eine Halterungs-Verriegelungselement (48) und das wenigstens eine Gehäuse-Verriegelungselement (44) entlang der Verriegelungsachse (46) ineinandergreifen können.

2. Halterungsbasisteil nach Anspruch 1 , **dadurch gekennzeichnet, dass** sich wenigstens ein Halterungs-Verriegelungselement (48) entlang einer gedachten Verriegelungsachse (46) erstreckt, die quer zu einer gedachten Zugachse (88) des wenigstens einen Halteabschnitts (58) an dem wenigstens einen Befestigungsabschnitt (54) verläuft.

3. Halterungsbasisteil nach einem der vorigen Ansprüche 1 oder 2, **dadurch gekennzeichnet, dass** eine Verriegelung-/Entriegelung-Kraftkomponente entlang der Verriegelungsachse (46), die zum Verriegeln oder entriegeln aufgebracht werden muss, quer zu einer Halte-Kraftkomponente gerichtet sein, mit der das Kameragehäuse (20) an dem Halterungsbasisteil (22) gehalten wird, wobei die Kraftkomponenten zum Halten des Kameragehäuses (20) an dem Halterungsbasisteil (22) im Wesentlichen durch die Schwerkraft bewirkt werden.

4. Halterungsbasisteil nach einem der vorigen Ansprüche 1 bis 3, **dadurch gekennzeichnet, dass** die Verriegelungsachse (46) quer zu entsprechenden Haltekräften des Kameragehäuses (20) an dem Halterungsbasisteil (22), welche zumindest bei stehendem Fahrzeug (10) durch die Schwerkraft hervorgerufen werden, verläuft.

5. Halterungsbasisteil nach einem der vorigen Ansprüche, **dadurch gekennzeichnet, dass** wenigstens ein Halterungs-Verriegelungselement (48) wenigstens eine Erhebung aufweist oder daraus besteht und/oder wenigstens ein Halterungs-Verriegelungselement wenigstens eine Vertiefung aufweist oder daraus besteht.

6. Halterungsbasisteil nach einem der vorigen Ansprüche, **dadurch gekennzeichnet, dass** wenigstens ein Halteabschnitt (56, 58) wenigstens einen Einschubbereich (68, 78) in Richtung der Verbindungsachse (42) betrachtet seitlich begrenzt und/oder wenigstens ein Halteabschnitt (56, 58) wenigstens einen Einschubbereich (68, 78) auf der dem wenigstens einen Befestigungsabschnitt (54) gegenüberliegenden Seite begrenzt.

7. Halterungsbasisteil nach einem der vorigen Ansprüche, **dadurch gekennzeichnet, dass** wenigstens ein Halteelement (32, 36) wenigstens einen Anschlag (60) aufweist, welcher den wenigstens einen Einschubbereich (68, 78) in Einschubrichtung (28) des wenigstens einen gehäuseseitigen Verbindungselements (30, 34) in den wenigstens einen Einschubbereich (68, 78) betrachtet begrenzt.

8. Halterungsbasisteil nach einem der vorigen Ansprüche, **dadurch gekennzeichnet, dass** wenigstens ein Halteelement (32, 36) wenigstens ein Führungselement (70, 82) aufweist, welches auf der dem wenigstens einen Befestigungsabschnitt (54) zugewandten Seite des wenigstens einen Einschubbereichs (68, 78) angeordnet ist.

9. Halterungsbasisteil nach einem der vorigen Ansprüche, **dadurch gekennzeichnet, dass** wenigstens zwei Halteelemente (32, 36) mit ihren jeweiligen Befestigungsabschnitten (54) über einen gemeinsamen Basis-Befestigungsabschnitt (50) so miteinander verbunden sind, dass sie in Richtung ihrer Verbindungsachsen (40, 42) betrachtet hintereinander oder schräg hintereinander angeordnet sind.

10. Halterungsbasisteil nach einem der vorigen Ansprüche, **dadurch gekennzeichnet, dass** wenigstens zwei Halteelemente (32, 36) mit ihren jeweiligen Befestigungsabschnitten (54) über einen gemeinsamen Basis-Befestigungsabschnitt (50) so miteinander verbunden sind, dass ihre Verbindungsachsen (40, 42) von dem Basis-Befestigungsabschnitt (50) aus betrachtet auf gleicher Höhe parallel zueinander verlaufen und/oder wenigstens zwei Halteelemente (32, 36) mit ihren jeweiligen Befestigungsabschnitten (54) über einen gemeinsamen Basis-Befestigungsabschnitt (50) so miteinander verbunden sind, dass ihre Verbindungsachsen (40, 42) von dem Basis-Befestigungsabschnitt (50) aus betrachtet in unterschiedlicher Höhe parallel zueinander verlaufen.

11. Kameragehäuse (20) mit wenigstens einem Verbindungselement (30, 34) zur trennbaren Verbindung mittels einer Schiebebewegung entlang einer gedachten Verbindungsachse (40, 42) mit wenigstens einem Halteelement (32, 36) eines Halterungsbasisteils (22), mit dem das Kameragehäuse (20) direkt oder indirekt an einem Fahrzeugteil (14) eines Fahrzeugs (10) befestigt werden kann, wobei wenigstens ein Verbindungselement (30, 34) wenigstens ein Gehäuse-Verriegelungselement (44) aufweist, welches mit wenigstens einem Halterungs-Verriegelungselement (48) aufseiten des wenigstens einen Halteelements (32, 36) zusammenwirken kann, um die Verbindung zwischen dem wenigstens einen Verbindungselement (30, 34) und dem wenigstens einen Halteelement (32, 36) zu verriegeln, **dadurch gekennzeichnet, dass** wenigstens ein Verbindungselement (30, 34) wenigstens einen Verbindungsflügel aufweist, welcher in einen Einschubbereich (68, 78) wenigstens eines Halteelements (32, 36) aufseiten der Halterungsbasisteil (22) eingeschoben werden kann, wobei an dem wenigstens einen Verbindungsflügel wenigstens ein Gehäuse-Verriegelungselement (44) angeordnet ist, wobei
sich wenigstens ein Gehäuse-Verriegelungselement (44) entlang einer gedachten Verriegelungsachse (46) erstreckt, die quer zu der Verbindungsachse (42) des wenigstens einen gehäuseseitigen Verbindungselements (34) in den wenigstens einen Einschubbereich (78) verläuft, so dass das wenigstens eine Halterungs-Verriegelungselement (48) und das wenigstens eine Gehäuse-Verriegelungselement (44) entlang der Verriegelungsachse (46) ineinandergreifen.

12. Kameragehäuse nach Anspruch 11, **dadurch gekennzeichnet, dass** wenigstens ein Gehäuse-Verriegelungselement (44) wenigstens eine Vertiefung aufweist oder daraus besteht und/oder wenigstens ein Gehäuse-Verriegelungselement wenigstens eine Erhebung aufweist oder daraus besteht.

13. Kameragehäuse nach einem der Ansprüche 11 oder 12, **dadurch gekennzeichnet, dass** wenigstens ein Verbindungselement (34) wenigstens eine Presserhebung (86) aufweist.

14. Kameragehäuse nach einem der Ansprüche 11 bis 13, **dadurch gekennzeichnet, dass** wenigstens zwei Verbindungselemente (30, 34) so an dem Kameragehäuse (20) angeordnet sind, dass ihre Verbindungsachsen (40, 42) von der Seite, von der das Halterungsbasisteil (22) angeordnet wird, aus betrachtet auf gleicher Höhe parallel zueinander verlaufen und/oder wenigstens zwei Verbindungselemente (30, 34) so an dem Kameragehäuse (20) angeordnet sind, dass ihre Verbindungsachsen (40, 42) von der Seite, von der das Halterungsbasisteils (22) angeordnet wird, aus betrachtet in unterschiedlicher Höhe parallel zueinander verlaufen.

15. Kamerasystem für ein Fahrzeug (10) zur Befestigung, mit wenigstens einem Kameragehäuse (20) und mit wenigstens einem Halterungsbasisteil (22), mit dem das wenigstens eine Kameragehäuse (20) an einem Fahrzeugteil (14) des Fahrzeugs (10) befestigt werden kann, wobei das wenigstens eine Kameragehäuse (20) mittels einer Schiebebewegung entlang einer gedachten Verbindungsachse (40, 42) trennbar mit dem wenigstens einen Halterungsbasisteil (22) verbunden werden kann, **dadurch gekennzeichnet, dass** wenigstens ein Halterungsbasisteil (22) wenigstens ein Halteelement (32, 36) nach einem der Ansprüche 1 bis 11 aufweist und wenigstens ein Kameragehäuse (20) wenigstens ein Verbindungselement (30, 34) nach einem der Ansprüche 12 bis 16 aufweist.

## Claims

1. Mounting base part (22) for attaching at least one camera housing (20) to a vehicle part (14) of a vehicle (10), with at least one holding element (32, 36) that has at least one fastening section (54), with which the at least one holding element (32, 36) can be attached directly or indirectly to the vehicle part (14), and that has at least one holding section (56, 58), with which the at least one holding element (32, 36) can be detachably connected by means of a sliding movement along an imaginary connection axis (40, 42) with at least one connecting element (30, 34) on the side of the at least one camera housing (20), wherein at least one holding section (56, 58) at least partially defines at least one insertion area (68, 78), into which the at least one housing-side connecting element (30, 34) can be inserted for detachable connection with the at least one holding element (32, 36), at least one holding element (36) has at least one mounting-locking element (48), which can interact with at least one housing-locking element (44) on the side of the camera housing (20) to lock a connection between the at least one holding element (36) and the at least one connecting element (34), wherein at least one mounting-locking element (48) is arranged in at least one insertion area (78), **characterized in that** at least one holding section (58) and/or at least one mounting-locking element (48) is elastically movable at least transversely to the connection axis (42), wherein at least one mounting-locking element (48) extends along an imaginary locking axis (46) that runs transversely to the connection axis (42), so that in an end position of the connection, the at least one mounting-locking element (48) and the at least one housing-locking element (44) can interlock along the locking axis (46).

2. Mounting base part according to claim 1, **characterized in that** at least one mounting-locking element (48) extends along an imaginary locking axis (46) that runs transversely to an imaginary pull axis (88) of the at least one holding section (58) on the at least one fastening section (54).

3. Mounting base part according to one of the preceding claims 1 or 2, **characterized in that** a locking/unlocking force component along the locking axis (46), which must be applied for locking or unlocking, is directed transversely to a holding force component with which the camera housing (20) is held on the mounting base part (22), wherein the force components for holding the camera housing (20) on the mounting base part (22) are substantially caused by gravity.

4. Mounting base part according to one of the preceding claims 1 to 3, **characterized in that** the locking axis (46) runs transversely to corresponding holding forces of the camera housing (20) on the mounting base part (22), which are caused by gravity at least when the vehicle (10) is stationary.

5. Mounting base part according to one of the preceding claims, **characterized in that** at least one mounting-locking element (48) has at least one protrusion or consists thereof and/or at least one mounting-locking element has at least one recess or consists thereof.

6. Mounting base part according to one of the preceding claims, **characterized in that** at least one holding section (56, 58) laterally limits at least one insertion area (68, 78) when viewed in the direction of the connection axis (42) and/or at least one holding section (56, 58) limits at least one insertion area (68, 78) on the side opposite to the at least one fastening section (54).

7. Mounting base part according to one of the preceding claims, **characterized in that** at least one holding element (32, 36) has at least one stop (60), which limits the at least one insertion area (68, 78) in the insertion direction (28) of the at least one housing-side connecting element (30, 34) into the at least one insertion area (68, 78).

8. Mounting base part according to one of the preceding claims, **characterized in that** at least one holding element (32, 36) has at least one guide element (70, 82), which is arranged on the side of the at least one insertion area (68, 78) facing the at least one fastening section (54).

9. Mounting base part according to one of the preceding claims, **characterized in that** at least two holding elements (32, 36) are connected to each other with their respective fastening sections (54) via a common base fastening section (50) in such a way that they are arranged one behind the other or diagonally behind each other when viewed in the direction of their connection axes (40, 42).

10. Mounting base part according to one of the preceding claims, **characterized in that** at least two holding elements (32, 36) are connected to each other with their respective fastening sections (54) via a common base fastening section (50) in such a way that their connection axes (40, 42), viewed from the base fastening section (50), run parallel to each other at the same height and/or at least two holding elements (32, 36) are connected to each other with their respective fastening sections (54) via a common base fastening section (50) in such a way that their connection axes (40, 42), viewed from the base fastening section (50), run parallel to each other at different heights.

11. Camera housing (20) with at least one connecting element (30, 34) for detachable connection by means of a sliding movement along an imaginary connection axis (40, 42) with at least one holding element (32, 36) of a mounting base part (22), with which the camera housing (20) can be attached directly or indirectly to a vehicle part (14) of a vehicle (10), wherein at least one connecting element (30, 34) has at least one housing-locking element (44), which can interact with at least one mounting-locking element (48) on the side of the at least one holding element (32, 36) to lock the connection between the at least one connecting element (30, 34) and the at least one holding element (32, 36), **characterized in that** at least one connecting element (30, 34) has at least one connecting wing, which can be inserted into an insertion area (68, 78) of at least one holding element (32, 36) on the side of the mounting base part (22), wherein at least one housing-locking element (44) is arranged on the at least one connecting wing, wherein at least one housing-locking element (44) extends along an imaginary locking axis (46) that runs transversely to the connection axis (42) of the at least one housing-side connecting element (34) into the at least one insertion area (78), so that the at least one mounting-locking element (48) and the at least one housing-locking element (44) interlock along the locking axis (46).

12. Camera housing according to claim 11, **characterized in that** at least one housing-locking element (44) has at least one recess or consists thereof and/or at least one housing-locking element has at least one protrusion or consists thereof.

13. Camera housing according to one of claims 11 or 12, **characterized in that** at least one connecting element (34) has at least one pressure protrusion (86).

14. Camera housing according to one of claims 11 to 13, **characterized in that** at least two connecting elements (30, 34) are arranged on the camera housing (20) in such a way that their connection axes (40, 42), viewed from the side from which the mounting base part (22) is arranged, run parallel to each other at the same height and/or at least two connecting elements (30, 34) are arranged on the camera housing (20) in such a way that their connection axes (40, 42), viewed from the side from which the mounting base part (22) is arranged, run parallel to each other at different heights.

15. Camera system for a vehicle (10) for attachment, with at least one camera housing (20) and with at least one mounting base part (22), with which the at least one camera housing (20) can be attached to a vehicle part (14) of the vehicle (10), wherein the at least one camera housing (20) can be detachably connected to the at least one mounting base part (22) by means of a sliding movement along an imaginary connection axis (40, 42), **characterized in that** at least one mounting base part (22) has at least one holding element (32, 36) according to one of claims 1 to 11 and at least one camera housing (20) has at least one connecting element (30, 34) according to one of claims 12 to 16.

## Revendications

1. Partie de base de support (22) pour fixer au moins un boîtier de caméra (20) à une partie de véhicule (14) d'un véhicule (10), comprenant au moins un élément de maintien (32, 36) qui présente au moins une section de fixation (54) avec laquelle l'au moins un élément de maintien (32, 36) peut être fixé directement ou indirectement à la partie de véhicule (14), et qui présente au moins une section de maintien (56, 58) avec laquelle l'au moins un élément de maintien (32, 36) peut être relié de manière détachable au moyen d'un mouvement de glissement le long d'un axe de liaison imaginaire (40, 42) avec au moins un élément de liaison (30, 34) du côté de l'au moins un boîtier de caméra (20), au moins une section de maintien (56, 58) délimitant au moins partiellement au moins une zone d'insertion (68, 78) dans laquelle l'au moins un élément de liaison (30, 34) côté boîtier peut être inséré pour une liaison détachable avec l'au moins un élément de maintien (32, 36), au moins un élément de maintien (36) présentant au moins un élément de verrouillage de support (48) qui peut coopérer avec au moins un élément de verrouillage de boîtier (44) du côté du boîtier de caméra (20) pour verrouiller une liaison entre l'au moins un élément de maintien (36) et l'au moins un élément de liaison (34), au moins un élément de verrouillage de support (48) étant disposé dans au moins une zone d'insertion (78), **caractérisée en ce qu'**au moins une section de maintien (58) et/ou au moins un élément de verrouillage de support (48) est mobile élastiquement au moins transversalement à l'axe de liaison (42), au moins un élément de verrouillage de support (48) s'étendant le long d'un axe de verrouillage imaginaire (46) qui s'étend transversalement à l'axe de liaison (42), de sorte que dans une position finale de la liaison, l'au moins un élément de verrouillage de support (48) et l'au moins un élément de verrouillage de boîtier (44) peuvent s'engager l'un dans l'autre le long de l'axe de verrouillage (46).

2. Partie de base de support selon la revendication 1, **caractérisée en ce qu'**au moins un élément de verrouillage de support (48) s'étend le long d'un axe de verrouillage imaginaire (46) qui s'étend transversalement à un axe de traction imaginaire (88) de l'au moins une section de maintien (58) sur l'au moins une section de fixation (54).

3. Partie de base de support selon l'une des revendications précédentes 1 ou 2, **caractérisée en ce qu'**une composante de force de verrouillage/déverrouillage le long de l'axe de verrouillage (46), qui doit être appliquée pour verrouiller ou déverrouiller, est dirigée transversalement à une composante de force de maintien avec laquelle le boîtier de caméra (20) est maintenu sur la partie de base de support (22), les composantes de force pour maintenir le boîtier de caméra (20) sur la partie de base de support (22) étant essentiellement causées par la gravité.

4. Partie de base de support selon l'une des revendications précédentes 1 à 3, **caractérisée en ce que** l'axe de verrouillage (46) s'étend transversalement aux forces de maintien correspondantes du boîtier de caméra (20) sur la partie de base de support (22), qui sont causées par la gravité au moins lorsque le véhicule (10) est à l'arrêt.

5. Partie de base de support selon l'une des revendications précédentes, **caractérisée en ce qu'**au moins un élément de verrouillage de support (48) présente au moins une saillie ou en est constitué et/ou au moins un élément de verrouillage de support présente au moins un creux ou en est constitué.

6. Partie de base de support selon l'une des revendications précédentes, **caractérisée en ce qu'**au moins une section de maintien (56, 58) délimite latéralement au moins une zone d'insertion (68, 78) dans la direction de l'axe de liaison (42) et/ou au moins une section de maintien (56, 58) délimite au moins une zone d'insertion (68, 78) sur le côté opposé à l'au moins une section de fixation (54).

7. Partie de base de support selon l'une des revendications précédentes, **caractérisée en ce qu'**au moins un élément de maintien (32, 36) présente au moins une butée (60) qui délimite l'au moins une zone d'insertion (68, 78) dans la direction d'insertion (28) de l'au moins un élément de liaison (30, 34) côté boîtier dans l'au moins une zone d'insertion (68, 78).

8. Partie de base de support selon l'une des revendications précédentes, **caractérisée en ce qu'**au moins un élément de maintien (32, 36) présente au moins un élément de guidage (70, 82) qui est disposé sur le côté de l'au moins une zone d'insertion (68, 78) tourné vers l'au moins une section de fixation (54).

9. Partie de base de support selon l'une des revendications précédentes, **caractérisée en ce qu'**au moins deux éléments de maintien (32, 36) sont reliés entre eux par leurs sections de fixation respectives (54) via une section de fixation de base commune (50) de telle sorte qu'ils sont disposés l'un derrière l'autre ou obliquement l'un derrière l'autre dans la direction de leurs axes de liaison (40, 42).

10. Partie de base de support selon l'une des revendications précédentes, **caractérisée en ce qu'**au moins deux éléments de maintien (32, 36) sont reliés entre eux par leurs sections de fixation respectives (54) via une section de fixation de base commune (50) de telle sorte que leurs axes de liaison (40, 42) s'étendent parallèlement l'un à l'autre à la même hauteur vu depuis la section de fixation de base (50) et/ou au moins deux éléments de maintien (32, 36) sont reliés entre eux par leurs sections de fixation respectives (54) via une section de fixation de base commune (50) de telle sorte que leurs axes de liaison (40, 42) s'étendent parallèlement l'un à l'autre à des hauteurs différentes vu depuis la section de fixation de base (50).

11. Boîtier de caméra (20) avec au moins un élément de liaison (30, 34) pour une liaison détachable au moyen d'un mouvement de glissement le long d'un axe de liaison imaginaire (40, 42) avec au moins un élément de maintien (32, 36) d'une partie de base de support (22), avec lequel le boîtier de caméra (20) peut être fixé directement ou indirectement à une partie de véhicule (14) d'un véhicule (10), au moins un élément de liaison (30, 34) présentant au moins un élément de verrouillage de boîtier (44) qui peut coopérer avec au moins un élément de verrouillage de support (48) du côté de l'au moins un élément de maintien (32, 36) pour verrouiller la liaison entre l'au moins un élément de liaison (30, 34) et l'au moins un élément de maintien (32, 36), **caractérisé en ce qu'**au moins un élément de liaison (30, 34) présente au moins une aile de liaison qui peut être insérée dans une zone d'insertion (68, 78) d'au moins un élément de maintien (32, 36) du côté de la partie de base de support (22), au moins un élément de verrouillage de boîtier (44) étant disposé sur l'au moins une aile de liaison, au moins un élément de verrouillage de boîtier (44) s'étendant le long d'un axe de verrouillage imaginaire (46) qui s'étend transversalement à l'axe de liaison (42) de l'au moins un élément de liaison (34) côté boîtier dans l'au moins une zone d'insertion (78), de sorte que l'au moins un élément de verrouillage de support (48) et l'au moins un élément de verrouillage de boîtier (44) s'engagent l'un dans l'autre le long de l'axe de verrouillage (46).

12. Boîtier de caméra selon la revendication 11, **caractérisé en ce qu'**au moins un élément de verrouillage de boîtier (44) présente au moins un creux ou en est constitué et/ou au moins un élément de verrouillage de boîtier présente au moins une saillie ou en est constitué.

13. Boîtier de caméra selon l'une des revendications 11 ou 12, **caractérisé en ce qu'**au moins un élément de liaison (34) présente au moins une saillie de pression (86).

14. Boîtier de caméra selon l'une des revendications 11 à 13, **caractérisé en ce qu'**au moins deux éléments de liaison (30, 34) sont disposés sur le boîtier de caméra (20) de telle sorte que leurs axes de liaison (40, 42) s'étendent parallèlement l'un à l'autre à la même hauteur vu du côté où la partie de base de support (22) est disposée et/ou au moins deux éléments de liaison (30, 34) sont disposés sur le boîtier de caméra (20) de telle sorte que leurs axes de liaison (40, 42) s'étendent parallèlement l'un à l'autre à des hauteurs différentes vu du côté où la partie de base de support (22) est disposée.

15. Système de caméra pour un véhicule (10) à fixer, comprenant au moins un boîtier de caméra (20) et au moins une partie de base de support (22) avec laquelle l'au moins un boîtier de caméra (20) peut être fixé à une partie de véhicule (14) du véhicule (10), l'au moins un boîtier de caméra (20) pouvant être relié de manière détachable à l'au moins une partie de base de support (22) au moyen d'un mouvement de glissement le long d'un axe de liaison imaginaire (40, 42), **caractérisé en ce qu'**au moins une partie de base de support (22) présente au moins un élément de maintien (32, 36) selon l'une des revendications 1 à 11 et au moins un boîtier de caméra (20) présente au moins un élément de liaison (30, 34) selon l'une des revendications 12 à 16.
